Europäisches Patentamt

European Patent Office

Office européen des brevets

(11) Veröffentlichungsnummer : **0 179 097**
**B1**

# (12) EUROPÄISCHE PATENTSCHRIFT

(45) Veröffentlichungstag der Patentschrift :
**11.01.89**

(21) Anmeldenummer : **85901947.3**

(22) Anmeldetag : **24.04.85**

(86) Internationale Anmeldenummer :
**PCT/CH 85/00063**

(87) Internationale Veröffentlichungsnummer :
**WO/8505061 (21.11.85 Gazette 85/25)**

(51) Int. Cl.⁴ : **B 24 C  1/04**, G 03 F  7/26,
**B 44 C  1/22**

(54) **VERFAHREN ZUM BESCHRIFTEN, DEKORIEREN UND STRUKTURIEREN VON HARTEN OBERFLÄCHEN, INSBESONDERE VON METALLEN UND GLÄSERN.**

(30) Priorität : **02.05.84 CH 2161/84**

(43) Veröffentlichungstag der Anmeldung :
**30.04.86 Patentblatt 86/18**

(45) Bekanntmachung des Hinweises auf die Patenterteilung : **11.01.89 Patentblatt 89/02**

(84) Benannte Vertragsstaaten :
**CH DE FR IT LI**

(56) Entgegenhaltungen :
**DE--A-- 2 238 465**
**DE--A-- 3 044 528**
**DE--B-- 1 281 899**
**US--A-- 2 016 092**
**US--A-- 4 093 754**
**US--A-- 4 154 064**
**US--A-- 4 159 600**
**US--A-- 4 430 416**

(73) Patentinhaber : **GRABER, Adelheid**
**Blumenstrasse 13**
**CH-2503 Biel (CH)**

(72) Erfinder : **GRABER, Adelheid**
**Blumenstrasse 13**
**CH-2503 Biel (CH)**

(74) Vertreter : **Lusuardi, Werther G.**
**Dr. Lusuardi AG Stockerstrasse 8**
**CH-8002 Zürich (CH)**

**Beschreibung**

Der Gegenstand der Erfindung bezieht sich auf ein Verfahren zum Beschriften, Dekorieren und Strukturieren von harten Oberflächen, insbesondere von Metallen und Gläsern und dessen Anwendung zum Beschriften und/oder Dekorieren von Uhren- und Bijouterieartikeln, sowie zum Herstellen von gedruckten Schaltungen.

Es ist bekannt Beschriftungen auf Metalloberflächen, beispielsweise Uhrenschalen, mittels Laserstrahlen aufzubringen. Dieses Verfahren benötigt teure Vorrichtungen und ist auch im Betrieb aufwendig.

Ein anderes bekanntes Verfahren zum Beschriften und Dekorieren von Metalloberflächen besteht darin den gewünschten Schriftzug oder das Dekor mit einem geeigneten Material auf die Metall- oder Glasoberfläche aufzubringen, beispielsweise mittels Siebdruck- oder Decalque-Technik und die blanke Oberfläche chemisch zu ätzen. Nach Entfernung des Abdeckmaterials bildet die blank gebliebene Oberfläche im Kontrast zur geätzten, matten Oberfläche den gewünschten Schriftzug.

Auch dieses bekannte Verfahren benötigt teure, stets zu ersetzende chemische Bäder und führt auch bei sachgemässer Ausführung zu einer hohen Ausschussquote. Zudem ist der Umgang mit den Aetzflüssigkeiten nicht ungefährlich.

Ausgehend von dem Stand der Technik liegt der Erfindung die Aufgabe zugrunde ein einfaches, sicheres und kostengünstiges Verfahren zur Beschriftung, Dekorierung und Strukturierung von Metall- und Glasoberflächen zu schaffen, welches auf einer rein physikalischen Oberflächenstrukturveränderung des zu behandelnden Gutes beruht.

Das erfindungsgemässe Verfahren wird gemäß Anspruch 1 durchgeführt.

Das mikrostrahlresistente Material wird vorzugsweise in Form eines polymerisierbaren flüssigen Filmes, insbesondere eines Monomers, Comonomers, Prepolymers oder trocknenden Oeles oder Gemischen davon auf die Oberfläche gebracht und chemisch, vorzugsweise bei erhöhter Temperatur und/oder durch oxidative Trocknung ausgehärtet.

Als optimale Viskosität der verwendeten flüssigen Filme hat sich eine solche zwischen 1500-3000 mPa. s, vorzugsweise von 2000-2500 mPa. s (gemessen bei 25 °C) erwiesen. Es lassen sich damit, insbesondere bei Verwendung der Siebdrucktechnik Beschriftungen, Dekors und Muster von extremer Konturentreue erzielen. Die Schichtdicke des aufgebrachten Flüssigkeitsfilms beträgt vorzugsweise 5 bis 30 μm.

Als geeignete mikrostrahlresistente Materialien haben sich solche auf Epoxidharz- und Polyester-Basis erwiesen. Von letzteren insbesondere solche auf Alkydharz-Basis. Solche von mehrwertigen Alkoholen und mehrbasischen Säuren abgeleitete Harze unterliegen je nach Art der verwendeten Carbonsäure einer oxydativen Polymerisation nach Art eines trocknenden Oeles, wobei ein sehr zäher, elastischer der Mikrostrahl-Behandlung grossen Widerstand leistender Film entsteht. Es gibt zahlreiche Variationsmöglichkeiten für die Zusammensetzung des Alkyds, wobei sich die Derivate des Soyaoels besonders bewährt haben.

Vorzugsweise Verwendung haben nichtplastifizierte isobutylverätherte Melaminformaldehydharze und Leinoel-rizinenoel-modifizierte Alkydharze.

Von den Epoxyharzen hat sich insbesondere die folgende Qualität bewährt:
- Epoxyäquivalentgewicht 400-550, vorzugsweise 450-500
- Mittleres Molekulargewicht zwischen 800-1000, vorzugsweise 900
- Hydroxylwert 0,24-0,28, vorzugsweise 0,26
- Esteräquivalentgewicht 140-160, vorzugsweise 150.

Die Aushärtung des Epoxyharzes erfolgt entweder mit einem Polyaminoamid oder thermisch, diejenige des Alkydharzes vorzugsweise thermisch bei Temperaturen zwischen 80 und 180 °C während ca. 2 Stunden. Der ausgehärtete Film aus mikrostrahlresistentem Material sollte eine Zugfestigkeit von über 45 kg/cm$^2$ vorzugsweise von 80 bis 350 kg/cm$^2$ aufweisen.

Der das mikrostrahlresistente Material bildende Film kann ein- oder mehrschichtig auf die Oberfläche des zu behandelnden Gutes appliziert werden. Bei Anwendung einer Mehrschichtentechnik ist vor Auftragung einer neuen Schicht, die darunterliegende Schicht mindestens teilweise auszuhärten.

Die Mehrschichtentechnik ist deshalb von grösserer Bedeutung, weil dadurch das aufzubringende Material eine relativ geringe Viskosität aufweisen kann, was die Erzeugung von Beschriftungen im Zehntelsmillimeterbereich und darunter gestattet, wie sie gerade in der Uhren- und Bijouterieindustrie häufig vorkommen.

Eine weitere Variante der Mehrschichtentechnik besteht darin Schichten mit unterschiedlicher Flächenausdehnung aufzubringen um dadurch eine dreidimensional strukturierte Abdeckmaske zu erzeugen, welche bei entsprechender Mikrostrahlung die Erzielung eines dreidimensionalen Musters in einem Arbeitsgang ermöglicht.

Das mikrostrahlresistente Material kann mit einer entsprechenden Druckform auf die zu beschriftende Oberfläche aufgebracht werden, beispielsweise mittels einer Schablone im Siebdruckverfahren, einer Druckform im Decalque-Verfahren oder mittels der Fotolacktechnik.

Die Mikrostrahlbehandlung besteht in einer auf die Resistenz des Abdeckmaterials zeitlich und intensitätsmässig abgestimmte Bestrahlung der Metalloberfläche mit einem extrem feinkörnigen Strahlgut, beispielsweise Glaskügelchen.

Als optimale Korngrösse für das Strahlgut hat sich ein Partikeldurchmesser von 70-110 μm erwiesen. Speziell für Glasoberflächen haben sich hochreine Aluminiumoxidpartikel bewährt. Das Strahlgut wird vorzugsweise mit einem Druck von 0,7 bis 1,7 bar, vorzugsweise von 0,9 bis 1,1 bar auf die Oberfläche geschleudert. Die Dauer der Strahlbehandlung variiert je nach gewünschtem Effekt und beträgt in der Regel 5 bis 10 Sekunden.

Dabei werden die blanken Stellen der bestrahlten Oberfläche in ihrer Struktur derart verändert, dass sie ein mattes Aussehen erhalten. Zur Erzeugung einer Beschriftung können entweder die Ziffern und Buchstaben mit dem mikrostrahlresistenten Material abgedeckt werden oder umgekehrt das Negativ der Ziffern und Buchstaben. In beiden Fällen muss nach erfolgter Oberflächenstrukturveränderung nur noch das Abdeckmaterial entfernt werden, beispielsweise mit einem Lösungsmittel, um die darunterliegende, unveränderte, vorzugsweise hochglanzpolierte Metalloder Glasoberfläche freizugeben, welche je nach verwendeter Druckform einem Schriftzug oder einem Dekor entspricht und sich gegenüber der mikrogestrahlten Oberfläche kontrastmässig abhebt. Als besonders geeignete Lösungsmittel haben sich chlorierte Kohlenwasserstoffe, beispielsweise Methylenchlorid, erwiesen.

Das erfindungsgemässe Verfahren findet vorzugsweise in der Uhren- und Schmuck-Industrie Anwendung, wo das dauerhafte und abriebbeständige Anbringen von extrem kleinen Schriftzügen oder Dekors, beispielsweise Markenzeichen, Serienummern, Herstellerhinweise oder Kodierungen von grösster Bedeutung ist. Aber auch bei der Herstellung von gedruckten Schaltungen kann das erfindungsgemässe Verfahren mit entsprechenden Anpassungen vorteilhafterweise angewendet werden.

Die wesentlichen Vorteile des erfindungsgemässen Verfahrens sind darin zu erblicken, dass keine zusätzlichen, definitiv auf der Oberfläche verbleibenden Schichten notwendig sind und dass praktisch kein Material von der Oberfläche abgetragen wird, was besonders für Edelmetalle von Bedeutung ist. Das erfindungsgemässe Verfahren eignet sich insbesondere für die Beschriftung, bzw. Dekorierung der Oberfläche von Metallen jeglicher Art und Legierungen davon, insbesondere von Edelmetallen, wie Gold und Platin, sowie von Gläsern jeder Art, insbesondere von Mineral- und Saphirgläsern.

**Patentansprüche**

1. Verfahren zum Beschriften, Dekorieren und Strukturieren von harten Oberflächen, insbesondere von Metallen und Gläsern, durch teilweise Abdeckung der Oberfläche mit einem flüssigen, aushärtbaren Material, Aushärtung des flüssigen Materials, Bestrahlung der nicht mit dem ausgehärteten Material abgedeckten Oberfläche mit einem Strahlgut und anschliessende Entfernung des abdeckenden Materials, dadurch gekennzeichnet, dass das flüssige aushärtbare Material in Form eines polymerisierbaren flüssigen Filmes eines Monomers, Comonomers, oder Prepolymers und/oder trocknenden Oeles auf die Oberfläche aufgebracht wird, dass die Aushärtung zu einer mikrostrahlresistenten Abdeckschicht chemisch und/oder durch oxidative Trocknung erfolgt, dass das Strahlgut feinkörnig ist und dass die ausgehärtete mikrostrahlresistente Abdeckschicht nach dem Strahlvorgang mit einem organischen Lösungsmittel entfernt wird.

2. Verfahren nach Anspruch 1, dadurch gekennzeichnet, dass die Abdeckung mittels Siebdruck-, Decalque- oder Fotolacktechnik erfolgt.

3. Verfahren nach Anspruch 1 oder 2, dadurch gekennzeichnet, dass die Aushärtung des flüssigen Materials bei erhöhter Temperatur durchgeführt wird.

4. Verfahren nach Anspruch 3, dadurch gekennzeichnet, dass das mikrostrahlresistente Material auf Polyester-Basis, vorzugsweise auf Alkydharz-Basis aufgebaut ist.

5. Verfahren nach Anspruch 3, dadurch gekennzeichnet, dass das mikrostrahlresistente Material auf Epoxidharz-Basis aufgebaut ist.

6. Verfahren nach einem der Ansprüche 1 bis 5, dadurch gekennzeichnet, dass das mikrostrahlresistente Material in mehreren Schichten aufgebracht wird, wobei vor Applikation einer zusätzlichen Schicht die darunter liegende Schicht ausgehärtet wird.

7. Verfahren nach Anspruch 6, dadurch gekennzeichnet, dass die Schichten eine unterschiedliche Flächen-Ausdehnung aufweisen zwecks Erzielung eines dreidimensionalen Musters.

8. Verfahren nach einem der Ansprüche 1 bis 7, dadurch gekennzeichnet, dass das mikrostrahlresistente Material mit einem Lösungsmittel vorzugsweise einem chlorierten Kohlenwasserstoff, beispielsweise Methylenchlorid entfernt wird.

9. Verfahren nach einem der Ansprüche 1 bis 8, dadurch gekennzeichnet, dass die mikrogestrahlte Oberfläche vor Entfernung des mikrostrahlresistenten Materials galvanisiert, vorzugsweise vergoldet wird.

10. Verfahren nach einem der Ansprüche 1 bis 9, dadurch gekennzeichnet, dass das ausgehärtete, mikrostrahlresistente Material eine Zugfestigkeit von über 45 kg/cm$^2$, vorzugsweise von 80 bis 350 kg/cm$^2$ aufweist.

11. Verfahren nach einem der Ansprüche 1 bis 10 zum Beschriften und Dekorieren der Oberfläche von Metallen jeglicher Art, vorzugsweise von Edelmetallen und Glas dadurch gekennzeichnet, dass über eine entsprechende Schablone Einbrennlack aufgebracht und eingebrannt wird, anschliessend die blanken Stellen der Oberfläche zur Strukturveränderung im Mikrostrahlverfahren bearbeitet werden und schliesslich der aufgetragene Lack weggelöst wird.

12. Anwendung des Verfahrens nach einem der Ansprüche 1 bis 11 zum Beschriften, Dekorieren und Strukturieren von Uhren- und Bijouterieartikeln, sowie zur Herstellung von gedruckten Schaltungen.

**Claims**

1. Process for making an inscription, decoration or structure on hard surfaces, in particular on metals and glasses, by partially coating said surfaces with a liquid, hardenable material, hardening said liquid material, blasting the remaining blank parts of the said surfaces with a blastcleaning material and by subsequently removing said coating material, characterized in that said liquid, hardenable material is applied on said surfaces in form of a polymerizable, liquid film of a monomer, comonomer or prepolymer and/or drying oil, that said hardening procedure leading to a coating layer resistant to micro-particle blasting occurs chemically and/or by oxidative drying, that the blastcleaning material is fine grained and that the hardened coating layer resistant to micro-particle blasting is removed after the blasting process by means of an organic solvent.

2. Process according to claim 1, characterized in that said coating occurs by serigraphy, by copying or by photoresist technique.

3. Process according to claim 1 or 2, characterized in that said hardening of said liquid material is performed at elevated temperature.

4. Process according to claim 3, characterized in that said material resistant to micro-particle blasting is based on polyester, preferably on alkyd resin material.

5. Process according to claim 3, characterized in that said material resistant to micro-particle blasting is based on epoxy resin material.

6. Process according to one of the claims 1 to 5, characterized in that said material resistant to micro-particle blasting is applied in several layers, whereby each layer is hardened before the next additional layer is applied.

7. Process according to claim 6, characterized in that said several layers have surface areas of different extent in order to achieve a three dimensional structure.

8. Process according to one of the claims 1 to 7, characterized in that said material resistant to micro-particle blasting is removed by means of a solvent, preferably by means of a chlorinated hydrocarbon, for example methylene chloride.

9. Process according to one of the claims 1 to 8, characterized in that said surface blasted with micro-particles is electroplated, preferably gold-plated before said material resistant to micro-particle blasting is removed.

10. Process according to one of the claims 1 to 9, characterized in that said hardened material resistant to micro-particle blasting has a tensile strength of over 45 kg/cm$^2$, preferably of 80 to 350 kg/cm$^2$.

11. Process according to one of the claims 1 to 10 for making an inscription or decoration on metal surfaces of any kind, preferably of noble metals, or on glass, characterized in that baking varnish is applied by means of a corresponding template and is burned in, that the remaining blank parts of the said surfaces are subsequently subjected to said micro-particle blasting in order to alter its structure and that finally said applied varnish is dissolved.

12. Application of the process according to one of the claims 1 to 11 for making an inscription, decoration or structure on watches or jewellery, as well as for manufacturing printed circuits.

**Revendications**

1. Procédé pour faire des inscriptions, décorations et structures sur des surfaces dures, en particulier sur des métaux et verres, en recouvrant partiellement les surfaces avec un matériel liquide et durcissable, en durcissant le matériel liquide, en décapant les surfaces qui n'ont pas été couvertes par le matériel durci avec des abrasifs et en enlevant ensuite le matériel de recouvrement, caractérisé en ce que le matériel liquide et durcissable est appliqué sur les surfaces en forme d'un film liquide et polymérisable d'un monomère, comonomère ou prépolymère et/ou d'une huile siccative, que le durcissement produisant une couche de recouvrement résistante au décapage aux micro-particules est faite par voie chimique et/ou durcissement oxidatif, que les abrasifs sont à grain fin et que la couche durcie de recouvrement résistante au décapage aux micro-particules est enlevée après la procédure de décapage à l'aide d'un solvant organique.

2. Procédé selon la revendication 1, caractérisé en ce que le recouvrement est obtenu par sérigraphie, décalque ou par la technique de résine photo-sensible.

3. Procédé selon la revendication 1 ou 2, caractérisé en ce que le durcissement du matériel liquide est obtenu à une température élevée.

4. Procédé selon la revendication 3, caractérisé en ce que le matériel résistant au décapage aux micro-particules est à base de polyester, préférablement à base de résine alkyde.

5. Procédé selon la revendication 3, caractérisé en ce que le matériel résistant au décapage aux micro-particules est à base d'époxy-résine.

6. Procédé selon une des revendications 1 à 5, caractérisé en ce que le matériel résistant au décapage aux micro-particules est appliqué en plusieurs couches et que chaque couche est durcie avant que la prochaine couche est appliquée.

7. Procédé selon la revendication 6, caractérisé en ce que les couches ont une étendue différente pour obtenir une structure à trois dimensions.

8. Procédé selon une des revendications 1 à 7, caractérisé en ce que le matériel résistant au décapage aux micro-particules est enlevé à l'aide d'un solvant, préférablement à l'aide d'un hydrocarbure chloré, par exemple chlorure de méthylène.

9. Procédé selon une des revendications 1 à 8, caractérisé en ce que la surface décapée aux micro-particules est galvanisée, préférablement dorée, avant l'élimination du matériel résistant au décapage aux micro-particules.

10. Procédé selon une des revendications 1 à 9, caractérisé en ce que le matériel durci, résistant au décapage aux micro-particules possède une résistance à la traction de plus de 45 kg/cm$^2$, préférablement entre 80 et 350 kg/cm$^2$.

11. Procédé selon une des revendications 1 à 10, pour faire des inscriptions ou décorations sur des surfaces métalliques de toute sorte, préférablement de métaux précieux, et vitreuses, caractérisé en ce qu'un vernis au four est appliqué moyennant un patron correspondant et qu'il est cuit, qu'ensuite les parties brillantes de la surface sont soumises au traitement de décapage aux micro-particules pour obtenir un changement de la structure superficielle et que finalement le vernis appliqué est dissous.

12. Application du procédé selon une des revendications 1 à 11 pour faire des inscriptions, décorations et structures sur des articles d'horlogerie et de bijouterie, ainsi que pour la fabrication de circuits imprimés.